# FASCICULE DE BREVET EUROPEEN

(11) **EP 1 314 109 B1**
(45) Date de publication et mention de la délivrance du brevet: **03.05.2006**
(21) Numéro de dépôt: 01969845.5
(22) Date de dépôt: 31.08.2001
(51) Int. Cl.: G06F 17/30, H04L 29/06, H04L 29/08, H04Q 7/22, G06F 17/21, G06F 17/22

(54) **PROCEDE POUR L'EXPLOITATION D'APPLICATIONS GRAPHIQUES SUR UN TERMINAL MOBILE**
VERFAHREN ZUR AUSFÜHRUNG VON GRAPHISCHEN ANWENDUNGEN AUF EINEM MOBILEN ENDGERÄT
METHOD FOR OPERATING GRAPHIC APPLICATIONS ON A MOBILE TERMINAL

(30) Priorité: 01.09.2000 FR 0011201
(43) Date de publication de la demande: 28.05.2003
(73) Titulaire: In Fusio (S.A.), 33000 Bordeaux (FR)
(72) Inventeur: LANDSPURG, Thomas, F-33920 Civrac-de-Blaye (FR)
(74) Mandataire: Breese, Pierre
(86) Numéro de dépôt international: PCT/FR2001/002713
(87) Numéro de publication internationale: WO 2002/019160

(56) Documents cités:
- EP-A- 0 949 571
- WO-A-99/35593
- WO-A-99/35802
- SPIERS A: "Creating Dynamic WBMP images using PHP" WMLSCRIPT.COM, [en ligne] 13 janvier 2001 (2001-01-13), XP002168712 Extrait de l'Internet: <URL:wysiwyg://21/http://www.wmlscript.com /Article_Arch/dyn_wbmp.as> [extrait le 2001-05-31]
- WIRELESS APPLICATION PROTOCOL FORUM: "WAP-195-WAEOverview" WAP-195-WAEOVERVIEW, 29 mars 2000 (2000-03-29), pages 1-23, XP002155622 Web
- "wap white paper" EXECUTIVE SUMMARY, février 1999 (1999-02), XP002901226

## Description

La présente invention concerne le domaine des télécommunications mobiles, et plus particulièrement des applications graphiques sur des architectures utilisant des protocoles de type WAP (wireless Application Protocol) permettant de développer des applications et des services opérant sur des réseaux de communication sans fil. Les protocoles de type WAP se traduisent par des contraintes techniques liées à la nature des terminaux, et à la qualité des liaisons radio. En particulier, les terminaux comportent des mémoires vives de faible capacité et présentent des taux de transfert faibles. Ils comportent un navigateur simplifié permettant les dialogues bidirectionnels avec un serveur d'application, généralement par l'intermédiaire d'une passerelle réalisant la connexion enter le réseau informatique et le réseau de téléphonie sans fil, et le codage/décodage des requêtes et réponses entre le terminal mobile et le serveur d'applications.

Le codage/décodage permet de réduire la taille des données transmises, et de les compiler sous un format spécifique adapté aux limitations des terminaux mobiles.

L'art antérieur connaît, par la demande de brevet PCT WO 99/35593 (Microsoft), une extension d'architecture de définition de canaux. L'invention de cette demande PCT concerne un procédé permettant l'affichage d'informations, telles que celles disponibles sur l'Internet, sur un ordinateur, lequel procédé consiste à enregistrer un fichier de structure de contenu, un fichier de données et un fichier script. Le fichier de données renferme des données représentatives des informations et le fichier script renferme des informations script représentatives de la forme désirée dans laquelle rendre les données disponibles. Le fichier de structure du contenu, le fichier de données et le fichier script peuvent être reçus indépendamment par l'ordinateur. Le fichier de structure du contenu est lu de façon à déterminer quel script du fichier script est associé aux données à afficher. Les données issues du fichier de données sont extraites et le fichier script associé est exécuté en vu du rendu des données. Des instructions peuvent être stockées sur un support de données exploitables par ordinateur dans le but de mettre en oeuvre ledit procédé.

Les architectures WAP sont mal adaptées au téléchargement d'applications graphiques, dont la taille dépasse généralement les possibilités des mémoires vives des terminaux mobiles, et dont le temps de chargement est excessif.

L'invention vise à remédier à ces inconvénients. Elle concerne, dans son acception la plus générale, un procédé selon la revendication 1 et un système selon la revendication 6.

Les revendications 2 à 5 définissent des modes de réalisation du procédé selon l'invention, en particulier les variantes suivantes. Selon une variante préférée, la deuxième famille d'objets numériques correspondant à des descripteurs d'environnement sont structurés en blocs correspondant à des cellules d'un tableau représentant l'environnement graphique susceptible d'être affiché sur l'écran du terminal.

Selon une variante, la sélection des cellules affichées est commandée par le programme informatique téléchargé, en fonction de paramètres provenant des moyens d'entrée/sortie ou de variables internes.

Selon une variante particulière, les objets graphiques de la première famille peuvent être modifiés ou créés après leur téléchargement [par un éditeur graphique commandé par l'utilisateur].

Avantageusement, le procédé selon l'invention comporte des étapes de transmission de données relatifs au déroulement de l'application vers le serveur d'application.

La présente invention sera mieux comprise à la lecture de la description d'un exemple non limitatif de réalisation qui suit, ce référant aux dessins annexés où :

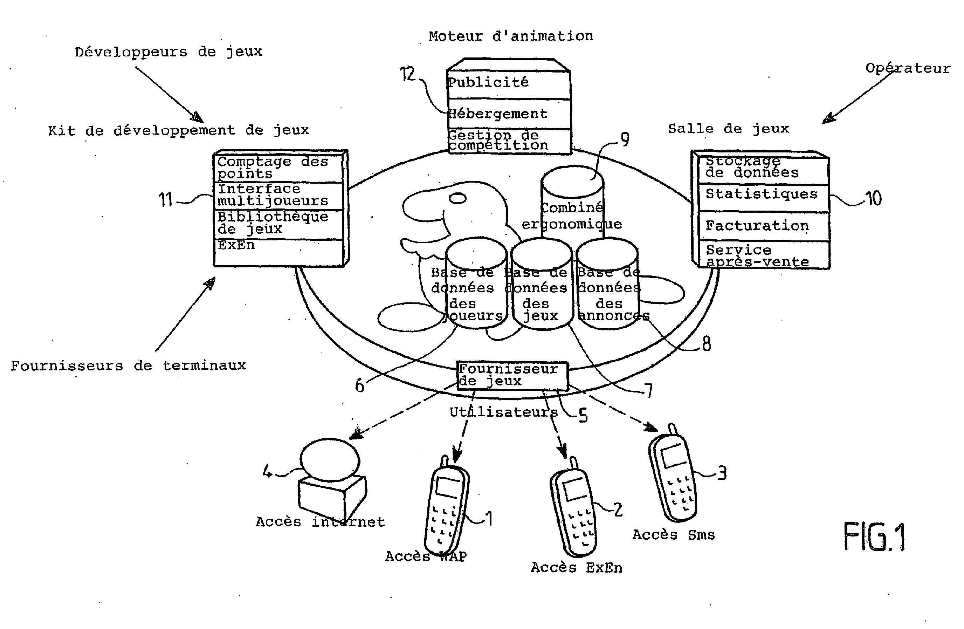

- la figure 1 représente l'architecture générale pour la mise en oeuvre du procédé selon l'invention.

L'application décrite à titre d'exemple non limitatif dans ce qui suit concerne un serveur de jeux pour téléphones mobiles WAP. L'utilisation du protocole WAP constitue un simple exemple de mise en oeuvre, l'invention n'étant pas liée au protocole WAP. Cette architecture est destinée à assurer une interface unique et cohérente pour les différents opérateurs :
- opérateur de téléphonie sans fil proposant l'infrastructure réseau et le portail d'accès WAP
- Fournisseurs de terminaux intégrant des jeux ou des modules de téléchargement
- Développeurs de jeux
- Serveurs de jeux proposant les services d'hébergements, et de gestion des jeux
- Utilisateurs.

La plateforme représentée en figure 1 est destinée à permettre l'accès aux ressources par des terminaux tels que des mobiles WAP (1), des mobiles utilisant un moteur d'exécution ExEN (2), des mobiles exploitant des messages courts SMS (3), ou encore des terminaux (4) comprenant un navigateur traditionnel. La plateforme comprend un serveur de jeux (5) et des bases de données (6 à 9). Des moyens informatiques (10) permettent l'exploitation statistiques des usages de la plateforme et éventuellement la facturation des services. Le moteur d'exécution ExEn est un programme d'ordinateur qui permet le téléchargement et l'exécution de jeux sur mobiles.

Des moyens d'animation (12) permettent de gérer l'environnement de la plateforme. Les applications sont enregistrées dans un serveur (11).

Les terminaux mobiles comprennent un moteur d'exécution ExEn [exécution engine] pour l'exploitation des services et applicatifs. Ce moteur assure l'interface entre le système d'exploitation du terminal considéré, et les applications téléchargées sous forme d'API dédiées aux jeux (« Sprite displau », pixel display, représentation 3D, effets musicaux et sonores,-).

L'interaction avec la plateforme se fait par l'intermédiaire du canal « données », par exemple sous la forme de courts messages (SMS).

Le téléchargement d'une application, notamment d'un jeu, consiste à télécharger un fichier comportant :
- une première famille d'objets numériques correspondant à une bibliothèque d'objets graphique,
- une deuxième famille d'objets numériques correspondant à des descripteurs d'environnement
- une troisième famille d'objets numériques correspondant à des programmes informatiques [scripts] formant une couche d'adaptation commandant les interactions entre les premiers et seconds objets numériques, ainsi que les interactions avec l'environnement local [moyens d'entrée/sortie du terminal considéré] ou externe [le serveur d'applications]. Ces objets assurent la conversion des fonctions spécifiques d'un jeu ou d'une application, en fonctions résidentes prévues dans le moteur d'exécution [ExEN].

A titre d'exemple, des jeux graphiques sont téléchargeables sous forme de fichiers numériques de 10 à 100 kilo-octets.

Les librairies du moteur d'exécution contiennent des fonctions permettant d'afficher des sprites (éléments graphiques) avec un masque, de les afficher dans différentes tailles, d'effectuer des opérations de multiplications de matrice et d'affichage de textures nappées en trois dimensions.

## Revendications

1. Procédé pour l'exploitation d'applications graphiques sur un terminal mobile (1) destiné à un réseau de communications sans fil, comportant une étape de téléchargement d'un fichier numérique correspondant à une application graphique appelée, ce téléchargement étant effectué sur ledit terminal à partir d'un serveur (11) d'applications et d'une passerelle réseau, ledit fichier numérique comprenant des objets graphiques, une famille d'objets numériques correspondant à des descripteurs d'environnement et une autre famille d'objets numériques correspondant à des programmes informatiques, ces programmes informatiques étant téléchargés et commandant les interactions entre les objets graphiques et les objets numériques correspondant aux descripteurs d'environnement, ainsi que les interactions avec l'environnement local constituées par les moyens d'entrée/sortie du terminal considéré ou externe constitué par le serveur d'applications, le procédé étant **caractérisé en ce qu'**il comporte une étape initiale de préparation des de fichiers numériques à télécharger consistant à extraire depuis les signaux échangés entre le terminal mobile et la passerelle réseau des données relatives aux spécificités du terminal considéré, et à sélectionner parmi l'ensemble des desdits fichiers à télécharger concernant l'application appelée les fichiers numériques adaptés auxdites spécificités, lesdits fichiers numériques adaptés comprenant ledit fichier numérique de l'étape de téléchargement.

2. Procédé pour l'exploitation d'applications graphiques sur un terminal mobile selon la revendication 1, **caractérise en ce que** lesdits descripteurs d'environnement sont structurés en blocs correspondant a des cellules d'un tableau représentant l'environnement graphique susceptible d'être affiché sur l'écran du terminal.

3. Procédé pour l'exploitation d'applications graphiques sur un terminal mobile selon la revendication 2, **caractérisé en ce que** la sélection des cellules affichées est commandée par le programme informatique téléchargé, en fonction de paramètres provenant des moyens d'entrée/sortie ou de variables internes.

4. Procédé pour l'exploitation d'applications graphiques sur un terminal mobile selon l'une quelconque des revendications précédentes, **caractérisé en ce que** les objets graphiques peuvent être modifiés après leur téléchargement.

5. Procédé pour l'exploitation d'applications graphiques sur un terminal mobile selon l'une quelconque des revendications précédentes, **caractérisé en ce qu'**il comporte des étapes de transmission de données relatives au déroulement de l'application vers le serveur d'application.

6. Système pour l'exploitation d'applications graphiques, telles que des jeux, sur un terminal mobile (1) destiné à un réseau de communications sans fil, comportant un serveur d'application comportant une mémoire dans laquelle sont enregistrées des applications composées de fichiers numériques, ledit serveur d'application étant adapté pour le téléchargement d'un fichier numérique parmi lesdits fichiers numériques à partir d'une passerelle réseau, ledit fichier numérique comprenant des objets graphiques, une famille d'objets numériques correspondant à des descripteurs d'environnement et une autre famille d'objets numériques correspondant à des programmes informatiques, ces programmes informatiques étant téléchargés et commandant les interactions entre lesdits objets graphiques et lesdits objets numériques correspondant à des descripteurs d'environnement, ainsi que les interactions avec l'environnement local constitué par les moyens d'entrée/sortie du terminal considéré ou externe constitué par le serveur d'applications, ledit système étant **caractérisé en ce que** ledit serveur d'application comprend en outre des moyens pour extraire les des données d'identification des spécificités d'un terminal et de selection des fichiers numériques adaptés auxdites spécificités.

## Claims

1. Method for operation of graphic applications on a mobile terminal (1) intended for a wireless communications network, comprising a step to download a digital file corresponding to a called graphic application, this downloading being done on the said terminal from an application server (11) and a network gateway, the said digital file comprising graphic objects, a family of digital objects corresponding to environmental descriptors and another family of digital objects corresponding to computer programs, these computer programs being downloaded and controlling interactions between the graphic objects and the digital objects corresponding to environmental descriptors, and interactions with the local environment formed from input / output means on the terminal considered or external means consisting of the application server, this method being **characterised in that** it comprises an initial step to prepare digital files to be downloaded consisting of extracting data related to specific features of the terminal considered from signals exchanged between the mobile terminal and the network gateway, and selecting the digital files appropriate for the said specific features from among the said set of files to be downloaded, the said appropriate digital files comprising the said digital file for the downloading step.

2. Method for operation of graphic applications on a mobile terminal according to claim 1, **characterised in that** the said environmental descriptors are structured into blocks corresponding to cells in a table representing the graphic environment that could be displayed on the terminal screen.

3. Method for operation of graphic applications on a mobile terminal according to claim 2, **characterised in that** the selection of cells displayed is controlled by the downloaded computer program, depending on parameters originating from input / output means or internal variables.

4. Method for operation of graphic applications on a mobile terminal according to any one of the previous claims, **characterised in that** the graphic objects can be modified after they have been downloaded.

5. Method for operation of graphic applications on a mobile terminal according to any one of the previous claims, **characterised in that** it comprises steps for transmission of data related to execution of the application to the application server.

6. System for operation of graphic applications such as games on a mobile terminal (1) for use on a wireless communications network, comprising an application server that comprises a memory in which applications composed of digital files are recorded, the said application server being adapted so that one digital file among the said digital files can be downloaded through a network gateway, the said digital file comprising graphic objects, a family of digital objects corresponding to environmental descriptors and another family of digital objects corresponding to computer programs, these computer programs being downloaded and controlling interactions between the said graphic objects, the said digital objects corresponding to environmental descriptors and interactions with the local environment formed by the input / output means of the terminal considered or external means consisting of the application server, the said system being **characterised in that** the said application server also comprises means of extracting data for identification of the specific features of a terminal and the selection of digital files adapted to the said specific features.

## Patentansprüche

1. Verfahren für die Nutzung von grafischen Anwendungen an einem mobilen Terminal (1) für ein kabelloses Kommunikationsnetz, wobei das Verfahren einen Schritt des Herunterladens von einer numerischen Datei, die einer aufgerufenen grafischen Anwendung entspricht, wobei dieses Herunterladen am Terminal anhand eines Anwendungsservers (11) und eines Netzgateways ausgeführt wird, wobei die numerische Datei grafische Objekte, eine Familie numerischer Objekte, die Umgebungsdeskriptoren entspricht, und eine andere Familie numerischer Objekte, die rechentechnischen Programmen entspricht, umfasst, wobei diese rechentechnischen Programme herunter geladen werden und Wechselwirkungen zwischen den grafischen Objekten und den numerischen Objekten, die den Umgebungsdeskriptoren entsprechen, steuern, sowie die Wechselwirkungen mit der lokalen Umgebung, die aus den Eingangs-/Ausgangsmitteln des betroffenen Terminals oder des externen Terminals, der vom Anwendungsserver gebildet wird, zusammensetzt, wobei das Verfahren **dadurch gekennzeichnet ist, dass** es einen anfänglichen Schritt der Vorbereitung von numerischen Dateien, die herunter zu laden sind, umfasst, wobei dieser Schritt darin besteht, von den zwischen dem mobilen Terminal und dem Netzgateway ausgetauschten Signalen Daten zu entnehmen, die sich auf die Spezifizitäten des betroffenen Terminals beziehen, und zwischen der Gesamtheit der herunter zu ladenden Dateien bezüglich der aufgerufenen Anwendung die numerischen Dateien zu wählen, die den Spezifizitäten angepasst sind, wobei die angepassten numerischen Dateien die numerische Datei des Schrittes des Herunterladens umfassen.

2. Verfahren für die Nutzung von grafischen Anwendungen an einem mobilen Terminal nach Anspruch 1, **dadurch gekennzeichnet, dass** die Umgebungsdeskriptoren in Blöcken strukturiert sind, die Zellen einer Tabelle entsprechen, die die grafische Umgebung darstellen, die auf dem Bildschirm des Terminals angezeigt werden kann.

3. Verfahren für die Nutzung von grafischen Anwendungen an einem mobilen Terminal nach Anspruch 2, **dadurch gekennzeichnet, dass** die Auswahl der angezeigten Zellen von dem herunter geladenen rechentechnischen Programm in Abhängigkeit von Parametern gesteuert wird, die aus den Eingangs-/Ausgangsmitteln oder internen Variablen hervorgehen.

4. Verfahren für die Nutzung von grafischen Anwendungen an einem mobilen Terminal nach einem der vorhergehenden Ansprüche, **dadurch gekennzeichnet, dass** die grafischen Objekte nach ihrem Herunterladen geändert werden können.

5. Verfahren für die Nutzung von grafischen Anwendungen an einem mobilen Terminal nach einem der vorhergehenden Ansprüche, **dadurch gekennzeichnet, dass** es Schritte der Übertragung von Daten bezüglich des Ablaufes der Anwendung zu dem Anwendungsserver umfasst.

6. System für die Nutzung von grafischen Anwendungen, wie zum Beispiel Spiele, an einem mobilen Terminal (1) für ein kabelloses Kommunikationsnetz, wobei das System einen Anwendungsserver umfasst, der einen Speicher umfasst, in dem Anwendungen gespeichert werden, die sich aus numerischen Dateien zusammensetzen, wobei der Anwendungsserver für das Herunterladen einer numerischen Datei unter den numerischen Dateien von einem Netzgateway ausgehend angepasst ist, wobei die numerische Datei eine Familie numerischer Objekte, die Umgebungsdeskriptoren entspricht, und eine andere Familie numerischer Objekte, die rechentechnischen Programmen entspricht, umfasst, wobei diese rechentechnischen Programme herunter geladen werden und Wechselwirkungen zwischen den grafischen Objekten und den numerischen Objekten, die Umgebungsdeskriptoren entsprechen, steuern, sowie die Wechselwirkungen mit der lokalen Umgebung, die sich aus den Eingangs-/Ausgangsmitteln des betroffenen Terminals oder des externen Terminals, der vom Anwendungsserver gebildet wird, zusammensetzt, wobei das System **dadurch gekennzeichnet ist, dass** der Anwendungsserver darüber hinaus über Mittel verfügt, um Identifizierungsdaten der Spezifizitäten eines Terminals und Auswahldaten der numerischen Dateien zu entnehmen, die den Spezifizitäten angepasst sind.
